# EUROPÄISCHE PATENTSCHRIFT

(11) **EP 1 593 694 B1**
(45) Veröffentlichungstag und Bekanntmachung des Hinweises auf die Patenterteilung: **12.12.2007**
(21) Anmeldenummer: 05009300.4
(22) Anmeldetag: 28.04.2005
(51) Int. Cl.: C08C 19/02

(54) **Hydrierte Copolymerisate aus nicht substituierten und substituierten konjugierten Dienen**
Hydrogenated copolymers from non-substituted and substituted conjugated dienes
Copolymères a base de diènes conjugés non substitués et de diènes conjugés substitués hydrogenés

(30) Priorität: 07.05.2004 DE 102004022676
(43) Veröffentlichungstag der Anmeldung: 09.11.2005
(73) Patentinhaber: LANXESS Deutschland GmbH, 51369 Leverkusen (DE)
(72) Erfinder: Stere, Christina Dr., 51373 Leverkusen (DE); Obrecht, Werner Prof.Dr., 47447 Moers (DE); Sondermann, Udo Dipl.Ing., 46286 Dorsten (DE); Sylvester, Gerd Dr., 51375 Leverkusen (DE)

(56) Entgegenhaltungen:
- EP-A- 0 775 725
- WO-A-03/033545
- US-A- 5 710 219
- US-B1- 6 184 320
- HSIEH H L ET AL: "POLYMERS FROM HYDROGENATED POLYDIENES PREPARED WITH NEODYMIUM CATALYSTS" ADVANCES IN ELASTOMERS AND RUBBER ELASTICITY, XX, XX, 1986, Seiten 197-220, XP008049797

## Beschreibung

Gegenstand der vorliegenden Erfindung sind statistisch aufgebaute, hydrierte Copolymerisate aus nicht substituierten konjugierten Dienen und substituierten konjugierten Dienen mit niedrigen Glasübergangstemperaturen und niedrigen Schmelzenthalpien, die durch Hydrierung von entsprechenden nicht hydrierten Copolymerisaten in üblicher Weise hergestellt werden. Die erfindungsgemäßen statistisch aufgebauten, hydrierten Copolymerisate aus nicht substituierten und substituierten Dienen sind sehr alterungsbeständig und besitzen eine hohe Elastizität, selbst bei niedrigen Temperaturen. Sie eignen sich daher hervorragend zur Herstellung von Kautschuk-Formkörpem aller Art, bei denen eine gute Alterungsbeständigkeit und eine gute Elastizität bei niedrigen Temperaturen gefordert werden. Beispielsweise sind sie besonders geeignet zur Herstellung von Motorlagern, da sie aufgrund der niedrigen Glastemperaturen auch bei hochfrequenter Beanspruchung nicht verhärten, für die Herstellung von Reifenseitenwänden, für die eine gute Alterungsbeständigkeit bei gutem Covulkanisationsverhalten sowie hohe Elastizitäten gefordert werden, für Reifenkarkassen, für die neben einer guten Alterungsbeständigkeit ein gutes Covulkanisationsverhalten gefordert wird, sowie für die Kautschukmodifikation spröder Thermoplaste, wofür neben einer niedrigen Glastemperatur eine gute Pfropfbarkeit wichtig ist.

Es ist bekannt, dass man Polybutadien, und Polyisopren, Butadien/Isopren-Blockcopolymere sowie statistische Butdien/Isopren-Copolymere mit sogenannten Coordinationskatalysatoren selektiv hydrieren kann. Es wird in diesem Zusammenhang auf "Journal of Polymers Science", Part A/1, Vol. 9, 2617-2623 (1971) verwiesen. Dort wird u. a. berichtet, dass man mit bestimmten Coordinationskatalysatoren aus Übergangmetallsalzen von 2-Ethylhexansäure und Organo-Aluminiumverbindungen- statistisch aufgebaute Copolymerisate aus Butadien und Isopren selektiv hydrieren kann. Bei Butadien/Isopren-Blockcopolymeren wird bevorzugt der Polybutadienblock hydriert. In dieser Veröffentlichung werden keine Produkteigenschaften bzw. physikalischen Parameter der hydrierten Produkte beschrieben, noch werden Angaben zum Aufbau der Polymerisate gemacht. Es finden sich auch keine Hinweise auf irgendwelche technische Eigenschaften der Produkte, die sie für bestimmte Einsatzzwecke als geeignet erscheinen lassen.

Aufgabe der vorliegenden Erfindung war es daher, statistisch aufgebaute, hydrierte Copolymerisate aus nicht substituierten konjugierten Dienen und substituierten konjugierten Dienen mit niedrigen Glasübergangstemperaturen und niedrigen Schmelzenthalpien zur Verfügung zu stellen, die einen definierten Gehalt an substituierten konjugierten Dienen enthalten, die sich zur Herstellung von festen Formkörpem aller Art eignen, die eine hohe Resistenz gegen Sauerstoff und Ozon besitzen und bei niedrigen Temperaturen eine hohe Elastizität aufweisen. Darüber hinaus sollten die erhaltenen Polymerisate nahezu amorph sein, damit die Hystereseverluste bei dynamischer Beanspruchung niedrig sind und damit der Compression Set der hieraus hergestellten Vulkanisate niedrig ist.

Gegenstand der vorliegenden Erfindung sind daher statistisch aufgebaute, hydrierte Copolymerisate aus nicht substituierten konjugierten Dienen und substituierten konjugierten Dienen mit einer Glasübergangstemperatur von ≤-65C, eine Schmelzenthalpie von ≤75J/g und einen Gehalt an Restdoppelbindungen im Bereich von 1 bis 60 %.

Die Mooneyviskositäten der hydrierten Produkte liegen im Bereich 5 bis 200 Mooneyeinheiten (ML1+4/100°C), bevorzugt im Bereich von 10 bis 150 Mooneyeinheiten.

Als nicht substituiertes konjugiertes Dien, das zum Aufbau der erfindungsgemäßen Copolymerisate dient, kommt Butadien in Betracht.

Als substituierte konjugierte Diene kommen in Betracht: 2-Methyl-buta-1,3-dien (Isopren); 2-Ethyl-buta-1,3-dien; 2,3-Dimethyl-buta-1,3-dien; Penta-1,3-dien; Hexa-1,3-dien; Hexa-2,4-dien, Octa-1,3-dien sowie 2-Phenyl-buta-1,3-dien.

Bevorzugt ist insbesondere 2-Methyl-buta-1,3-dien (Isopren).

Statistisch aufgebaute, hydrierte Copolymerisate aus Butadien und Isopren sind daher besonders bevorzugt.

Die als Ausgangsprodukte für die Hydrierung sich eignenden statistisch aufgebauten Copolymerisate aus nicht substituierten konjugierten Dienen und substituierten konjugierten Dienen können in bekannter Weise durch Ziegler-Natta-Polymerisation oder durch ionische Polymerisation in dafür geeigneten Lösungsmitteln und unter Zusatz von bekannten Reagentien zur Einstellung des Molekulargewichts, der Molekulargewichtsverteilung und der Mikrostruktur hergestellt werden.

In bevorzugter Weise erfolgt die Ziegler-Natta-Polymerisation mit Katalysatorsystemen auf Neodym-Basis, wobei Neodymsalze organischer Säuren bevorzugt eingesetzt werden. Die Neodym-Verbindungen werden üblicherweise in Kombination mit Aluminiumalkylen bzw. Aluminiumalkylhydriden und Halogen-Donoren eingesetzt. Als Halogen-Donoren dienen bevorzugt Aluminiumhalogenide sowie organische Halogenide, wie t-Butylchlorid. Als Aluminiumalkyle bzw. Aluminiumalkylhydride werden bevorzugt Tri-Alkylaluminium, Triisobutyl-Aluminium und/oder Diisobutyl-Aluminiumhydrid eingesetzt.

Beschrieben werden solche Ziegler-Natta-Polymerisationssysteme und die Polymerisation von konjugierten Dienen selbst, beispielsweise in US 3297667, US 4444903 US, 4461883, US 6255416, US 6391990, EP 7027; EP 11184; EP 968992, EP 1055659; EP 1099711, EP 1134233, EP 1162231, EP 5484897, WO 0069928, WO 0238635; WO 0238636;, WO 0248218, WO 03048221.

Darüber hinaus können die statistisch aufgebauten erfindungsgemäßen Copolymerisate auch hergestellt werden in bekannter Weise durch anionische Copolymerisation, die beispielsweise näher beschrieben ist von: H. L. Hsieh und R. Quirk: "Anionic Polymerization, Principles and Practical Applications", Marcel Dekker Inc. New York, Basel, 1966, Seiten 197-235.

Für den Fachmann ist es ohne weiteres möglich, beispielsweise durch die geeignete Auswahl der Initiatoren für die Polymerisation, des Lösungsmittels, des Molekulargewichtsreglers, der Additive, der Polymerisationsbedingungen sowie durch Auswahl des Verhältnisses von nicht substituiertem konjugierten Dien zu substituiertem konjugierten Dien, die unterschiedlichsten Typen der erfindungsgemäßen statistisch aufgebauten Copolymerisate herzustellen.

Als Kriterium für den statistischen Aufbau der erfindungsgemäßen Copolymerisate wird die Anwendbarkeit der Fox-Beziehung auf die Abhängigkeit der Glastemperatur von der Polymerzusammensetzung herangezogen (Hans-Georg Elias, Makromoleküle, Band 1, Grundlagen, S. 856, Hüthig und Wepf-Verlag 1990, 5. Auflage).

Die Hydrierung der nach bekannten Verfahren hergestellten statistisch aufgebauten Copolymerisate aus nicht substituierten konjugierten Dienen und substituierten konjugierten Dienen erfolgt in bekannter und üblicher Weise mit den dafür üblichen Katalysatoren. Als geeignet erweisen sich hierfür beispielsweise Metallsalze der 8. Nebengruppe des Periodensystems, insbesondere Nickel- und Kobaltsalze, die in Kombination mit Aluminiumalkylen, Methylalumoxan oder in Kombination mit Lithium- bzw. Aluminiumalkylen eingesetzt werden. Verwiesen wird in diesem Zusammenhang beispielsweise auf folgende Literaturstellen bzw. Patentveröffentlichungen: US 3333024, US 3700633, US 4107236, US 498033, US 3541064, 3595942, 4028485, US 3135716, US 3150209, US 3496154, US 3498960, US 4145298, US 4238202, US 323635, US 3265765, US 3322856, US 4980331, EP 401897, FR 1581146, FR 2393608, WO 9314130, US 5030779, GB 1198195, GB 1213411 sowie J. Macromol. Science, Reviews Macromol. Chem. Phys., C35(2), 239-285 (19995). Darüber hinaus kann auch die Hydrierung mit Katalysatoren auf Basis von Rhodium- und Rutheniumverbindungen durchgeführt werden. Weiterhin können Katalysatoren auf Basis von Palladium, Platin oder Iridium eingesetzt werden, die auch auf bekannten Trägem aufgebracht sein können (J. Macromol. Science, Reviews Macromol. Chem. Phys., C35(2), 239-285 (19995). Bevorzugt wird die Hydrierung in Gegenwart von Co- und Ni-Salzen in Kombination mit Aluminiumalkylen durchgeführt.

Die Menge an eingesetztem Katalysator kann leicht durch Vorversuche ermittelt werden und richtet sich nach dem gewünschten Hydriergrad der Polymeren, wobei Katalysatorkonzentrationen von etwa 0,2 mmol bis 1000 mmol Katalysator pro Mol Doppelbindung üblich sind.

Die Hydrierung kann auch nichtkatalytisch unter Verwendung von Hydrazinderivaten durchgeführt werden (J. Pol. Sci., Polymer Chem., A30, 397 (1992) sowie Macromolecules 25, 525 (1992).

Die Hydrierung erfolgt in dafür geeigneten organischen Lösungsmitteln, beispielsweise in flüssigen Alkanen, Cycloalkanen und/oder Aromaten, bevorzugt in Butan, Pentan, Hexan, Cyclohexan, Benzol und/oder Toluol.

Die Hydrierreaktion erfolgt üblicherweise bei Temperaturen im Bereich von ca. 20 bis 175°C, bevorzugt im Bereich 40 bis 120°C.

Der Wasserstoffdruck bei der Hydrierung beträgt etwa 5 bar bis 500 bar, bevorzugt 10 bis 100 bar, und die Hydrierzeiten etwa 10 min bis zu gut 4 Stunden. Die Hydrierbedingungen werden so eingestellt, dass der gewünschte Hydriergrad erreicht wird.

Der Hydriergrad liegt bei 40 bis 99%, und richtet sich in Abhängigkeit von der Zusammensetzung der statistisch aufgebauten, nicht hydrierten Copolymerisate nach den gewünschten physikalischen Eigenschaften der hydrierten Copolymerisate sowie der damit verbundenen Glasübergangstemperatur und Schmelzenthalpie.

Die Aufarbeitung der hydrierten erfmdungsgemäßen Polymerisate erfolgt in üblicher Weise durch Abtrennung des Hydrierkatalysators und Isolierung der Polymerisate durch Zusatz von entsprechenden Fällungsmitteln wie Ethanol oder Isopropylalkohol oder durch Strippen mit Wasserdampf. Darüber hinaus können die erhaltenen Copolymerisate bei der Aufarbeitung mit Kautschukhilfsmitteln, beispielsweise Alterungsschutzmitteln und Ölen, versetzt werden oder mit Komplexbildnern wie Zitronensäure und multifunktionellen Aminen, um eine eventuelle Verunreinigung der Metalle aus der katalytischen Umsetzung zu reduzieren.

Die Herstellung der erfindungsgemäßen Copolymerisate kann sowohl diskontinuierlich als auch in kontinuierlicher Weise erfolgen. So ist es möglich, die Herstellung der statistisch aufgebauten Copolymerisate und deren Hydrierung durchzuführen, ohne dass die statistisch aufgebauten Copolymerisate vor der Hydrierung aus der Polymerlösung isoliert werden müssen. Auch eine Hydrierung im gleichen Reaktor, in dem die Polymerisation durchgeführt wurde, ist möglich.

Selbstverständlich ist es möglich, die erhaltenen statistisch aufgebauten, hydrierten Copolymerisate mit anderen Kautschuken abzumischen, beispielsweise mit Naturkautschuk sowie mit bekannten Synthese-Kautschuken, wie Polybutadien, Styrol/Butadien-Kautschuk, Butylkautschuk, Ethylen/Propylen-Kautschuken (EPM und EPDM), hydriertem Nitrilkautschuk, Polychloropren, Nitrilkautschuk, Ethylen/Vinylacetat-Copolymer und chloriertem bzw. chlorsulfoniertem Polyethylen.

Das jeweilige Mischungsverhältnis der Kautschuke untereinander kann dabei leicht durch Vorversuche ermittelt werden und richtet sich nach dem späteren Einsatzzweck der erfindungsgemäßen Polymerisate.

Ein weiterer Gegenstand der Erfindung ist auch die Verwendung der erfindungsgemäßen hydrierten Polymerisate mit den zuvor beschriebenen physikalischen Eigenschaften zur Herstellung von Formkörpern aller Art, insbesondere zur Herstellung von technischen Gummiartikeln, wie Walzenbelägen, Motorlagern, Schwingungsdämpfern, Schuhsohlen, Schläuchen und Riemen sowie von verschiedenen Reifenbauteilen wie Reifenseitenwänden, Subtreads und Reifenkarkassen. Auch eignen sich die erfindungsgemäßen Polymerisate für die Modifikation spröder Thermoplaste, wie Polystyrol, Styrol/Acrylnitril- sowie 1-Methylstyrol/Acrylnitril-Copolymeren, sowie als Zusatz zu Heiz- und Schmierölen.

### Beispiele

### 1. Herstellung statistischer Butadien/Isopren-Copolymerer mit Nd-Katalyse

Die Herstellung der statistischen Butadien/Isopren-Copolymeren erfolgte in einem 1,7 1 Stahlautoklaven mit folgender Grundrezeptur, wobei für die Polymerisation ein präformierter Katalysator auf Neodymbasis eingesetzt wurde:

| | |
|---|---|
| Cyclohexan | 600 g |
| Monomermischung aus Butadien und Isopren | 100 g |
| DIBAH | 2,5 mmol/100 g Monomer |
| Präformierter Neodymkatalysator | 0,25 mmol/100 g Monomer |

Die Präformierung des Neodymkatalysators erfolgte unter Argon in einem Schlenkgefäß bei einer Konzentration von 0,1 M (bezogen auf Neodym) in Cyclohexan. Für die Präformierung wurden die einzelnen Katalysatorkomponenten in folgender Reihenfolge bei Raumtempratur zusammengegeben: Cyclohexan, Diisobutylaluminiumhydrid, Neodymversatat und Ethylaluminiumsesquichlorid (Molverhältnisse: n_{DIBAH}/n_{Nd}/ n_{Cl}=10:1:2). Vor der Verwendung des präformierten Katalysators wurde dieser bei Raumtemperatur gelagert (1-3 Tage). Zum Starten der Polymerisation wurde der präformierte Katalysator bei 60°C zur Lösung der Monomeren in Cyclohexan gegeben, wobei die Lösung Diisobutylaluminiumhydrid als Scavenger (Molverhältnis: n _{DIBAH}/n_{Nd} = 10/1) enthielt. Die Polymerisationen wurden jeweils nach 2 h bei 60°C abgebrochen.

In den Fällen, in denen das erhaltene Copolymer vor der Durchführung der Hydrierung isoliert wurde, wurde die Polymerisationsreaktion durch Zugabe von 70 ml einer 2,5%igen Lösung von 2,2'-Methylen-bis-(4-methyl-6-t-butyl)phenol (BKF) abgestoppt und das Polymer durch Koagulation mit Ethanol aus der Lösung isoliert und bei 50°C im Vakuumtrockenschrank bis zur Gewichtskonstanz getrocknet.

Die Glastemeperaturen und die Schnmelzenthalpien wurden mittels DSC (Differential Scanning Calorimetry) bestimmt (Kalorimeter Pyris DSC-7 der Fa. Perkin-Elmer). Hierfür wurden 11,6±0,3 mg Substanz in Normalkapseln eingewogen. Es wurden jeweils zwei Aufheizungen von jeweils - 100°C bis +150°C bei einer Heizrate von 20 K/min und einer Abkühlrate von 320 K/min mit Stickstoffspülung durchgeführt. Die nachfolgend angegebenen Glastemperaturen (Tg) und Schmelzenthalpien (ΔH) wurden jeweils bei der 2. DSC-Auflleizung bestimmt.

**Tabelle 1) Mittels Neodym-Katalyse hergestellte Kautschuke (Polybutadien, Polyisopren und statistische Butadien/Isopren-Copolymere)**

| Nr. | Butadien [Gew.%] | Isopren [Gew.%] | Katalysator [mmol/100g Mon.] | Isoprengehalt des Copolymeren^{a)} [Gew.%] | ΔH^{b)} [J/g] | Tg^{c)} [°C] | Tg_{ber} ^{d)} [°C] |
|---|---|---|---|---|---|---|---|
| 1 | 100 | 0 | 0,25 | 0 | 0 | -112 | -112 |
| 2 | 75 | 25 | 0,25 | 25,5 | 0 | -104 | -103,0 |
| 3 | 70 | 30 | 0,25 | 28,9 | 0 | -102 | -101,8 |
| 4 | 70 | 30 | 0,25 | 30,9 | 0 | -100 | -99 |
| 5 | 60 | 40 | 0,25 | 40,0 | 0 | -97 | -97,5 |
| 6 | 50 | 50 | 0,25 | 48,0 | 0 | -94 | -94,2 |
| 7 | 10 | 90 | 0,25 | 88,3 | 0 | -74,5 | -76 |
| 8 | 0 | 100 | 0,25 | 100 | 0 | -70 | -70 |

| | | | | | | | |
|---|---|---|---|---|---|---|---|
| a) durch ¹H-NMR bestimmte Isoprengehalte | | | | | | | |
| b) mittels DSC bestimmte Schmelzenthalpien (ΔH) | | | | | | | |
| c) mittels DSC bestimmte Glastemperaturen (Tg) | | | | | | | |
| d) mit Hilfe der Fox-Gleichung berechnete Glastemperaturen (Tg_{ber}): 1/Tg_{ber} = w₁/Tg₁ + w₂/Tg₂ , wobei für die beiden Homopolymeren Polyisopren (IR) und Polybutadien (BR) folgende Glastemperaturen verwendet wurden: Tg_{BR} =-112°C und Tg_{IR}= -70°C | | | | | | | |

In Tabelle 1) wird gezeigt, dass die mittels Neodymkatalyse hergestellten Butadien/Isopren-Copolymeren amorph sind (ΔH = 0) und dass die Abhängigkeit der Glastemperaturen von der Copolymerzusammensetzung mit Hilfe der Fox-Gleichung beschrieben werden kann, d. h. dass die Butadien/Isopren-Copolymeren statistisch aufgebaut sind.

### 2. Hydrierung der statistischen Butadien-Copolymeren auf Nd-Katalysator-Basis

Die Hydrierung der statistischen Butadien/Isopren-Copolymeren wurde mit einem präformierten Katalysator auf Basis Ni-Octoat [Ni(Oct)₂] und Triethylaluminium [TEA] durchgeführt (Polymer Preprints 2000, 4 (2), 1525). Die Präformierung dieser beiden Katalysatorkomponenten erfolgte unter Argon in einem Schlenkgefäß wobei TEA in Cyclohexan vorgelegt und Ni(Oct)₂ als Lösung in Cyclohexan tropfenweise zugegeben wurde. Das Molverhältnis TEA/Ni(Oct)₂ wurde konstant gehalten (Al:Ni=3,3:1).

Für die Hydrierung wurden auf 100 mol Doppelbindungen jeweils 0,3 Mol des präformierten Ni-Katalysators eingesetzt.

Für die Hydrierung wurden jeweils 30 g Polymer gelöst in 700 ml Cyclohexan in einem Stahlautoklaven vorgelegt. Vor der Hydrierung wurden 200 ml Cyclohexan abdestilliert. Dann wurde der präformierte Hydrierkatalysator als Dispersion in Cyclohexan zugegeben und Wasserstoff aufgedrückt Die Hydrierung erfolgte bei 50°C bei 5 bis 6,5 bar Wasserstoffdruck. Die (teil)hydrierten Copolymer-Proben wurden in Toluol gelöst, mit Citronsäure (0,5 ml einer 6%-igen Lösung Citronensäure in Ethanol) versetzt und mit 300 ml Wasser unter Durchleitung von Luft extrahiert. Die (teil)hydrierten Proben wurden in einer Ethanol:Wasser-Mischung (Ethanol:Wasser=10:1) koaguliert und im Trockenschrank bei 50°C im Vakuum getrocknet.

Die Glastemperaturen und Schmelzenthalpien der hydrierten Produkte sind in den Tabellen 2) - 7) zusammengestellt, wobei bei diesen Versuchen das statistische Butadien/Isopren-Copolymer nach der Polymerisation aus der Lösung isoliert wurde (keine in-situ-Hydrierung).

**Tabelle 2) Eigenschaften hydrierter Butadien/Isopren-Copolymerer mit 25,5 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 2.1* | 22 | -104 | -102 | 10 |
| 2.2* | 33 | -104 | -100 | 20 |
| 2.3 | 44 | -104 | -95,5 | 40 |
| 2.4 | 58 | -104 | -79 | 51 |
| 2.5* | 90 | -104 | n.a. | 110 |
| 2.6* | 100 | -104 | n.a. | 106 |

| | | | | |
|---|---|---|---|---|
| * nicht erfindungsgemäße Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 3) Eigenschaften hydrierter Butadien/Isopren-Copolymerer mit 28,9 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 3.1* | 35 | -102 | -98,5 | 16,1 |
| 3.2 | 50 | -102 | -82,5 | 45,5 |
| 3.3* | 100 | -102 | -48 | 64,3 |

| | | | | |
|---|---|---|---|---|
| * nicht erfindungsgemäßes Beispiel | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 4) Eigenschaften hydrierter Butadien/Isopren-Copolymerer mit 40 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 4.1* | 21,1 | -100 | -97,5 | 0 |
| 4.2* | 26,3 | -100 | -96 | 0 |
| 4.3* | 31,6 | -100 | -94 | 0 |
| 4.4 | 42,1 | -100 | -91 | 3 |
| 4.5 | 47,4 | -100 | -89,5 | 23 |
| 4.6 | 57,9 | -100 | -84 | 33 |
| 4.7 | 73,7 | -100 | -69,5 | 56 |

| | | | | |
|---|---|---|---|---|
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 5) Eigenschaften hydrierter Butadien/Isopren-Copolymerer mit 40 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 5.1* | 30 | -97 | -84,5 | 17,5 |
| 5.2 | 45 | -97 | -82,5 | 31,5 |
| 5.3 | 55 | -97 | -80,5 | 31,5 |
| 5.4 | 60 | -97 | -76 | 23 |
| 5.5 | 65 | -97 | -72,5 | 24 |
| 5.6 | 75 | -97 | -69,5 | 31,5 |
| 5.7 | 83 | -97 | -67,5 | 32,5 |
| 5.8 | 100 | -97 | -65,5 | 34 |
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 6) Eigenschaften hydrierter Butadien/Isopren-Copolymerer mit 48 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 6.1* | 25 | -94 | -92,5 | 0 |
| 6.2* | 30 | -94 | -91 | 0 |
| 6.3* | 33 | -94 | -89,5 | 0 |
| 6.4 | 42 | -94 | -86,5 | 2,8 |
| 6.5 | 50 | -94 | -82 | 5,8 |
| 6.6 | 56 | -94 | -77,5 | 20,1 |
| 6.7 | 67 | -94 | -73,5 | 28,2 |
| 6.8 | 83,3 | -94 | -63,5 | 33,5 |
| 6.9* | 100 | -94 | -62 | 34,5 |

| | | | | |
|---|---|---|---|---|
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 7) Eigenschaften hydrierter Butadien/Isopren-Copolymerer mit 88,3 Gew.% Isopren**

| Versuchs- Nr. | Hydriergrad^{a)} [%] | Tg^{b)} [°C] | Tg^{c)} [°C] | ΔH^{d)} J/g |
|---|---|---|---|---|
| 7.1* | 29 | -75 | -71,5 | 0 |
| 7.2 | 73 | -75 | -68,5 | 0 |
| 7.3 | 78 | -75 | -66 | 0 |
| 7.4* | 100 | -75 | -65,6 | 0 |

| | | | | |
|---|---|---|---|---|
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

Für die in-situ-Durchführung der Hydrierung wurden die Butadien/Isopren-Copolymeren nach Abschluss der Polymerisation nicht aus dem Lösungsmittel isoliert und die Hydrierung wurde im gleichen Lösungsmittel wie die Polymerisation durchgeführt. Bei diesem Versuch erfolgte die Abstoppung der Polymerisationsreaktion mit wasserfreiem Ethanol (Aldrich), wobei Al:EtOH-Verhältnisse von 1:5 und 1:10 gewählt wurden (siehe Tabelle 8). Die Probenaufarbeitung und die Polymercharakterisierung erfolgte wie zuvor beschrieben.

**Tabelle 8) Eigenschaften hydrierter Butadien/Isopren Copolymerer mit 30 Gew.% Isopren (in-situ-Hydrierung im gleichen Lösungsmittel wie Polymerisation)**

| Nr. | Al:EtOH^{e)} [molar] | Hydriergrad^{a)} [%] | Tg^{b)} [°C] | Tg^{c)} [°C] |
|---|---|---|---|---|
| 8.1 | 1:20 | 40 | -101 | -92,5 |
| 8.2 | 1:10 | 48 | -101 | -86,5 |
| 8.3 | 1:10 | 50 | -101 | -86 |
| 8.4 | 1:10 | 62 | -101 | -77 |
| 8.5 | 1:5 | 60 | -101 | -80 |
| 8.6 | 1:5 | 65 | -101 | -76 |
| 8.7 | 1:5 | 74 | -101 | -72,5 |
| 8.8* | 1:5 | 100 | -101 | -63,8 |

| | | | | |
|---|---|---|---|---|
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren ^{d)} Molverhältnis Al:EtOH beim Abstoppen der Polymerisationsreaktion | | | | |

### 3. Herstellung statistischer Butadien/Isopren-Copolymerer mit Li-Katalyse

Die Herstellung der statistischen Butadien/Isopren-Copolymeren mittels n-Butyllithium erfolgte in einem 1,71 Stahlautoklaven in Cyclohexan bei 60°C mit folgender Grundrezeptur:

| | |
|---|---|
| Cyclohexan | 600 g |
| Monomermischung aus Butadien und Isopren | 100 g |
| n-Butyllithium(1,8 M in Hexan) | 0,25 mmol/100 g Monomer |

Die Polymerisationen wurden nach jeweils 2 h durch Zugabe einer 2,5%-igen Lösung von 2,2'-Methylen-bis-(4-methyl-6-tertbutyl)phenol (BKF) in Ethanol, abgestoppt. Die Probenaufarbeitung und die Probencharakterisierung erfolgte wie bei den mittels Neodymkatalyse hergestellten Proben.

**Tabelle 9) Mittels n-Butyllithium-Katalyse hergestellte Kautschuke (Polybutadien, Polyisopren und statistische Butadien/Isopren-Copolymere)**

| Nr. | Butadien [Gew.%] | Isopren [Gew.%] | Isoprengehalt des Copolymeren^{a)} [Gew.%] | ΔH^{b)} [J/g] | Tg^{c)} [°C] | Tg_{ber}^{d)} [°C] |
|---|---|---|---|---|---|---|
| 9.1 | 100 | 0 | 0 | 0 | -97,8 | -97,8 |
| 9.2 | 80 | 20 | 22 | 0 | -91,5 | -91,7 |
| 9.3 | 50 | 50 | 46 | 0 | -83,5 | -84,5 |
| 9.4 | 40 | 60 | 57 | 0 | -79,5 | -81,0 |
| 9.5 | 20 | 80 | 83 | 0 | -71,8 | -72,2 |
| 9.6 | 10 | 90 | 90 | 0 | -69 | 69,7 |
| 9.7 | 0 | 100 | 100 | 0 | -65,5 | -66 |

| | | | | | | |
|---|---|---|---|---|---|---|
| a) durch ¹H-NMR bestimmte Isoprengehalte | | | | | | |
| b) mittels DSC bestimmte Schmelzenthalpien (ΔH) | | | | | | |
| c) mittels DSC bestimmte Glastemperaturen (Tg) | | | | | | |
| d) mit Hilfe der Fox-Gleichung berechnete Glastemperaturen (Tg_{ber}): 1/Tg_{ber} = w₁/Tg₁ + w₂/Tg₂ , wobei für die beiden Homopolymeren Polyisopren (IR) und Polybutadien (BR) folgende Glastemperaturen verwendet wurden: Tg_{BR} = -97,8°C und Tg_{IR} = -66°C | | | | | | |

In Tabelle 9) wird gezeigt, dass die mittels n-Butyllithium hergestellten Butadien/Isopren-Copolymeren amorph sind (ΔH = 0) und dass die Abhängigkeit der Glastemperaturen von der Copolymerzusammensetzung mit Hilfe der Fox-Gleichung beschrieben werden kann, d. h. dass die Butadien/Isopren-Copolymeren statistisch aufgebaut sind.

### 4. Hydrierung der statistischen Butadien-Copolymeren auf Li-Katalysator-Basis

Die Hydrierung und Charakterisierung der mit Hilfe von Butyllithium hergestellten Butadien/Isopren-Copolymeren erfolgte wie zuvor bei den mittels Neodymkatalyse hergestellten Copolymeren beschrieben, wobei pro 100 mol Doppelbindungen 0,2 mol Ni eingesetzt wurden.

Die Ergebnisse sind in den Tabellen 10)-14) zusammengestellt, wobei diese Versuche ohne in-situ-Technik durchgeführt wurden, d. h. die statistischen Butadien/Isopren-Copolymeren wurden im Anschluß an die Polymerisation aus der Lösung isoliert und für die Hydrierung wiederum in Cyclohexan gelöst.

**Tabelle 10) Eigenschaften hydrierter Butadien/Isopren Copolymerer mit 22 Gew.% Isopren**

| Nr. | Hydriergrad^{a)} [%] | Tg^{b)} [°C] | Tg^{c)} [°C] | ΔH^{d)} J/g |
|---|---|---|---|---|
| 10.1* | 21,7 | -91,5 | -91 | 7,9 |
| 10.2* | 33,7 | -91,5 | -90 | 15,9 |
| 10.3 | 43,5 | -91,5 | -88 | 28,8 |
| 10.4 | 54,4 | -91,5 | -84 | 45,2 |
| 10.5 | 69,6 | -91,5 | -73 | 42,2 |
| 10.6* | 80,2 | -91,5 | -59,5 | 57,8 |
| 10.7* | 92,9 | -91,5 | -45,5 | 64,1 |
| 10.8* | 100 | -91,5 | -39 | 65,9 |

| | | | | |
|---|---|---|---|---|
| * nicht erfindungsgemäßes Beispiele | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 11) Eigenschaften hydrierter Butadien/Isopren Copolymerer mit 46 Gew.% Isopren**

| Nr. | Hydriergrad^{a)} [%] | Tg^{b)} [°C] | Tg^{c)} [°C] | ΔH^{d)} J/g |
|---|---|---|---|---|
| 11.1* | 24 | -83,5 | -82,5 | 0 |
| 11.2* | 34,6 | -83,5 | -81 | 3,5 |
| 11.3 | 43,8 | -83,5 | -79 | 12 |
| 11.4 | 54,8 | -83,5 | -75 | 20,6 |
| 11.5 | 63,5 | -83,5 | -71,5 | 34,1 |
| 11.6 | 76,9 | -83,5 | -68,5 | 45,6 |
| 11.7 | 91,3 | -83,5 | -65,5 | 46,4 |
| 11.8* | 100 | -83,5 | -57,5 | 41,7 |

| | | | | |
|---|---|---|---|---|
| * nicht erfindungsgemäßes Beispiel | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 12) Eigenschaften hydrierter Butadien/Isopren Copolymerer mit 57 Gew.% Isopren**

| Nr. | Hydriergrad^{a)} [%] | Tg^{b)} [°C] | Tg^{c)} [°C] | ΔH^{d)} J/g |
|---|---|---|---|---|
| 12.1* | 20 | -79,5 | -78,5 | 0 |
| 12.2* | 23,8 | -79,5 | -77,5 | 0 |
| 12.3* | 33,3 | -79,5 | -76,5 | 8,9 |
| 12.4 | 42,9 | -79,5 | -73,5 | 12,6 |
| 12.5 | 55,3 | -79,5 | -71 | 15,9 |
| 12.6 | 67,9 | -79,5 | -68,5 | 27,2 |
| 12.7 | 82,7 | -79,5 | -66 | 38,7 |
| 12.7 | 100 | -79,5 | -64,5 | 34 |

| | | | | |
|---|---|---|---|---|
| * nicht erfindungsgemäßes Beispiel | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 13) Eigenschaften hydrierter Butadien/Isopren Copolymerer mit 83 Gew.% Isopren**

| Nr. | Hydriergrad^{a)} [%] | Tg^{b)} [°C] | Tg^{c)} [°C] | ΔH^{d)} J/g |
|---|---|---|---|---|
| 13.1* | 25 | -71,8 | -67,5 | 0 |
| 13.2* | 34,7 | -71,8 | -66,5 | 0 |
| 13.3 | 44,4 | -71,8 | -66,5 | 0 |
| 13.4 | 58 | -71,8 | -66 | 0 |
| 13.5 | 63 | -71,8 | -65,5 | 0 |
| 13.6 | 76,4 | -71,8 | -64,5 | 0 |
| 13.7 | 81,9 | -71,8 | -65 | 0 |
| 13.8 | 90,6 | -71,8 | -64,5 | 0 |

| | | | | |
|---|---|---|---|---|
| * nicht erfindungsgemäßes Beispiel | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

**Tabelle 14) Eigenschaften hydrierter Butadien/Isopren Copolymerer mit 90 Gew.% Isopren**

| Nr. | Hydriergrad^{a)} [%] | Tg^{b)} [°C] | Tg^{c)} [°C] | ΔH^{d)} J/g |
|---|---|---|---|---|
| 14.1* | 19,4 | -69 | -66 | 0 |
| 14.2* | 25 | -69 | -66 | 0 |
| 14.3* | 37,5 | -69 | -65 | 0 |
| 14.4 | 50 | -69 | -64 | 0 |
| 14.5 | 61,1 | -69 | -63,5 | 0 |
| 14.6 | 72,2 | -69 | -63,5 | 0 |
| 14.7* | 100 | -69 | -62,5 | 0 |

| | | | | |
|---|---|---|---|---|
| * nicht erfindungsgemäßes Beispiel | | | | |
| ^{a)} mittels ¹H-NMR bestimmter Hydriergrad | | | | |
| ^{b)} Glastemperaturen der Copolymeren vor der Hydrierung | | | | |
| ^{c)} Glastemperaturen der hydrierten Copolymeren | | | | |
| ^{d)} Schmelzenthalpien der hydrierten Copolymeren | | | | |

Für die in-situ-Durchführung der Hydrierung wurde das Butadien/Isopren-Copolymer nach Abschluss der Polymerisation nicht aus dem Lösungsmittel isoliert und die Hydrierung wurde direkt im Anschluss and die Polymerisation im gleichen Lösungsmittel und im gleichen Reaktor wie die Polymerisation durchgeführt. Bei diesem Versuch erfolgte die Abstoppung der Polymerisationsreaktion mit wasserfreiem Ethanol (Aldrich), wobei ein Al:EtOH-Verhältnis von 1:5 gewählt wurde (siehe Tabelle 15). Die Durchführung der Hydrierung, die Probenaufarbeitung und die Polymercharakterisierung erfolgte wie zuvor beschrieben.

**Tabelle 15) Eigenschaften des hydrierten Butadien/Isopren Copolymerer mit 30 Gew.% Isopren, bei dessen Herstellung die in situ-Technologie angewandt wurde**

| Nr. | Al:EtOH^{d)} [molar] | Hydriergrad^{a)} [%] | Tg^{b)} [°C] | ΔH^{c)} [°C] |
|---|---|---|---|---|
| 15.1 | 1:5 | 70 | -72,5 | 47,1 |

| | | | | |
|---|---|---|---|---|
| ^{a)} mittels ¹H-NMR bestimmter Hydriergrad | | | | |
| ^{b)} Glastemperaturen der Copolymeren vor der Hydrierung | | | | |
| ^{c)} Schmelzenthalpien des hydrierten Copolymeren | | | | |
| ^{d)} Molverhältnis Al:EtOH beim Abstoppen der Polymerisationsreaktion | | | | |

## Patentansprüche

1. Statistisch aufgebaute, hydrierte Copolymerisate aus nicht substituierten konjugierten Dienen und substituierten konjugierten Dienen mit einer Glasübergangstemperatur ≤ -65°C, einer Schmelzenthalpie ≤ 75 J/g und einem Gehalt an Restdoppelbindungen im Bereich von 1 bis 60 %.

2. Statistisch aufgebaute, hydrierte Copolymerisate nach Anspruch 1, **dadurch gekennzeichnet, dass** sie als nicht substituiertes konjugiertes Dien Butadien und als substituiertes konjugiertes Dien Isopren enthalten.

3. Verwendung der statistisch aufgebauten, hydrierten Copolymerisate nach Anspruch 1 zur Herstellung von Kautschukformkörpern.

4. Verwendung der statistisch aufgebauten, hydrierten Copolymerisate nach Anspruch 1 zur Kautschukmodifikation spröder Thermoplaste.

## Claims

1. Random, hydrogenated copolymers of unsubstituted conjugated dienes and substituted conjugated dienes having a glass transition temperature of ≤ -65°C, an enthalpy of fusion of ≤ 75 J/g and a content of residual double bonds in the range from 1 to 60%.

2. Random, hydrogenated copolymers according to Claim 1, **characterized in that** they contain butadiene as the unsubstituted conjugated diene and isoprene as the substituted conjugated diene.

3. Use of the random, hydrogenated copolymers according to Claim 1 for the production of rubber mouldings.

4. Use of the random, hydrogenated copolymers according to Claim 1 for the rubber modification of brittle thermoplastics.

## Revendications

1. Copolymères hydrogénés statistiques de diènes conjugués non substitués et de diènes conjugués substitués présentant une température de transition vitreuse ≤ -65°C, une enthalpie de fusion ≤ 75 J/g et une teneur en doubles liaisons résiduelles dans la plage de 1 à 60 %.

2. Copolymères hydrogénés statistiques selon la revendication 1, **caractérisés en ce qu'**ils renferment du butadiène en tant que diène conjugué non-substitué et de l'isoprène en tant que diène conjugué substitué.

3. Utilisation des copolymères hydrogénés statistiques selon la revendication 1 pour la production de corps moulés en caoutchouc.

4. Utilisation des copolymères hydrogénés statistiques selon la revendication 1 pour la modification du caoutchouc de matières thermoplastiques cassantes.
